(19) Europäisches Patentamt
European Patent Office
Office européen des brevets

(11) Veröffentlichungsnummer: **0 335 006**
**A2**

(12) # EUROPÄISCHE PATENTANMELDUNG

(21) Anmeldenummer: **88120248.5**

(51) Int. Cl.⁴: **C08K 5/43 , C08G 69/32**

(22) Anmeldetag: **05.12.88**

(30) Priorität: **03.03.88 DE 3806836**

(43) Veröffentlichungstag der Anmeldung:
**04.10.89 Patentblatt 89/40**

(84) Benannte Vertragsstaaten:
**AT BE CH DE FR GB IT LI NL**

(71) Anmelder: **HÜLS AKTIENGESELLSCHAFT**
**Patentabteilung / PB 15 - Postfach 13 20**
**D-4370 Marl 1(DE)**

(72) Erfinder: **Finke, Jürgen, Dr.**
**Am Alten Sportplatz 17 a**
**D-4370 Marl(DE)**
Erfinder: **Bartmann, Martin, Dr.**
**Burgstrasse 35**
**D-4350 Recklinghausen(DE)**
Erfinder: **Schmidt, Friedrich-Georg, Dr.**
**Kriegerweg 32**
**D-4400 Münster(DE)**

(54) **Formmassen bestehend aus einem thermoplastisch verarbeitbaren, aromatischen Polyamid.**

(57) Formmassen aus einem thermoplastisch verarbeitbaren, aromatischen Polyamid, welches die Reste nachfolgender Ausgangsmonomeren enthält :

A HOOC-Ar-COOH
B $H_2N$-Ar'-$NH_2$
C R-$SO_2$NH-R''

Die Komponente C ist zu 0 001 bis 10 Gew. % im Polyamid enthalten.

Die hergestellten Polyamidformmassen zeichnen sich durch gute mechanische Eigenschaften aus.

EP 0 335 006 A2

Xerox Copy Centre

# Formmassen bestehend aus einem thermoplastisch verarbeitbaren, aromatischen Polyamid

Gegenstand der Erfindung sind Formmassen bestehend aus einem thermoplastisch verarbeitbaren, aromatischen Polyamid.

Aromatische Polyamide der allgemeinen Formel

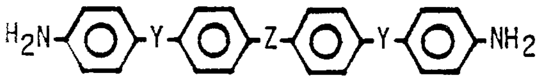

sind bekannt (s. z. B. DE-OS 36 09 011). Die Schmelzviskosität dieser aromatischen Polyamide ist allerdings sehr hoch. Daher sind bei ihrer Herstellung und Verarbeitung sehr hohe Temperaturen erforderlich - im allgemeinen mindestens 350 °C. Bei diesen Temperaturen wird häufig eine Schädigung des Produkts beobachtet, erkennbar an Verfärbungen oder einer Verschlechterung der mechanischen Eigenschaften.

Aufgabe der Erfindung war es, Formmassen auf Basis aromatischer Polyamide zur Verfügung zu stellen, die die geschilderten Nachteile der Produkte des Standes der Technik nicht aufweisen.

Die Aufgabe wurde gelöst durch aromatische Polyamide enthaltend die Reste nachstehender Ausgangsmonomeren:

A. HOOC - Ar - COOH
B. $H_2N$ - Ar′ - $NH_2$
C. R - $SO_2NH$ - R″

hierbei bedeutet

Ar, Ar′: 1.3- oder 1.4-Phenylen; 1.4-, 1.5-, 2.6- oder 2.7-Naphthylen,

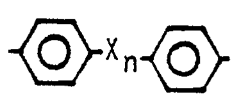

oder

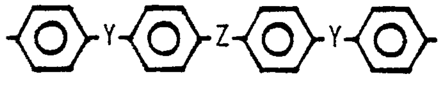

Ar und Ar′ können gleich oder verschieden sein;
X: -O-; -S-; $-SO_2-$; -CO-; $-CR'_2-$;
Y: -O-; -S-;
Z: $-SO_2-$; -CO-;

R: 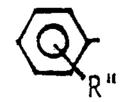 ; $C_{1-22}$-Alkyl;

R′: -H; $C_{1-4}$-Alkyl;

R″: 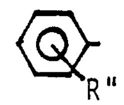 ; $C_{1-22}$-Alkyl;

R‴: -H; $C_{1-4}$-Alkyl; Halogen;
n:0 oder 1

wobei die Komponente C. zu 0,001 bis 10 Gew.-% - bezogen auf die Summe der Komponenten A. und B. in dem Polyamid enthalten ist.

Die erfindungsgemäße Komponente C. stellt ein niedermolekulares aliphatisches, araliphatisches oder aromatisches Sulfonsäureamid dar. Hierbei kann der aromatische Rest durch Halogen oder durch $C_{1-4}$-Alkylreste substituiert sein.

Bevorzugt eingesetzt werden als aliphatische Sulfonsäureamide Propylsulfonsäure-N-ethylamid, Butylsulfonsäure-N-butylamid, Butylsulfonsäure-N-decylamid, als araliphatische Sulfonsäureamide Benzolsulfonsäure-N-methylamid, Benzolsulfonsäure-N-propylamid, Benzolsulfonsäure-N-butylamid, sowie als aromatische Sulfonsäureamide Benzolsulfonsäure-N-phenylamid, Toluolsulfonsäure-N-phenylamid, Chlorbenzolsulfonsäure-N-p-toloylamid.

Als aromatische Dicarbonsäuren (Komponente A.) werden Isophthalsäure, Terephthalsäure, 1.4-, 1.5-, 2.6-, 2.7-Naphthalindicarbonsäure, 4,4′-Diphenyletherdicarbonsäure oder 4,4′-Benzophenondicarbonsäure, 4,4′-Diphenylsulfondicarbonsäure, 2-Phenoxyterephthalsäure oder Gemische davon eingesetzt.

Als aromatische Diamine (Komponente B.) kommen z. B. 4,4′-Bis(4-aminophenoxy)-diphenylsulfon, 4,4′-Bis(3-aminophenoxy)-diphenylsulfon, 4,4′-Bis(4-aminophenoxy)-benzophenon, 4,4′-Bis(3-aminophenoxy)-benzophenon, 4,4′-Bis(p-aminophenylmercapto)-benzophenon, 4,4′-Bis(p-aminophenylmercapto)-diphenylsulfon oder Gemische davon infrage.

Bevorzugt eingesetzt werden Isophthalsäure; 4,4′-Bis(4-aminophenoxy)diphenylsulfon, Benzolsulfonsäure-N-phenylamid; Benzolsulfonsäure-N-butylamid.

Das molare Einsatzverhältnis der Komponenten A. und B. bewegt sich im Bereich von etwa 1 : 1. Die erfindungsgemäße Komponente C. ist zu 0,001

bis 10 Gew.-%, vorzugsweise 0,05 bis 5 Gew.-%, - bezogen auf die Summe von A. und B. - in dem Polyamid enthalten.

Die Herstellung aromatischer Polyamide ist bekannt und wird z. B. in DE-OS 36 09 011 beschrieben. Dabei wird üblicherweise die Polykondensation in Gegenwart der erfindungsgemäßen Sulfonsäureamide durchgeführt.

Es ist auch möglich, die Sulfonsäureamide in einem 2. Schritt nach der Polykondensation zuzumischen. Dies geschieht entweder in der Polymerschmelze in einem geeigneten Schmelzemischer bzw. Extruder, in fester Phase durch Mischen des Polymergranulats mit dem Sulfonsäureamid in einem Taumeltrockner oder einem anderen entsprechenden Feststoffmischer oder durch Aufbringen einer Lösung des Sulfonsäureamids in einem organischen Lösungsmittel, wie z. B. Methylenchlorid, Chloroform, Toluol, Aceton, Ethanol, auf das Polyamid-Granulat und anschließendes Verdampfen des Lösungsmittels.

Zur Erhöhung des Molekulargewichtes können die aromatischen Polyamide einer Festphasennachkondensation in einer Inertgasatmosphäre unterzogen werden.

Die Polyamide können auf üblichen Maschinen durch Spritzguß oder Extrusion zu den erfindungsgemäßen Formmassen verarbeitet werden.

Die Formmassen können zusätzlich noch Füllstoffe, wie Talkum, oder Verstärkungsmittel, wie Glas-, ARAMID®- oder Kohlefasern, sowie andere übliche Zusätze, wie z. B. Pigmente oder Stabilisatoren, enthalten.

Die Formmassen werden nach üblichen Verfahren wie Spritzguß, Extrusion o. ä. zu Formteilen, Fasern, Folien usw. verarbeitet. Ebenso ist die Verwendung als Beschichtungsmittel ausgehend vom Pulver (z. B. Wirbelsinterverfahren), einer flüssigen Dispersion oder einer Lösung möglich.

Die erfindungsgemäßen Formmassen zeigen eine ausgezeichnete Schmelzviskosität, so daß sie im Vergleich zu anderen, bereits bekannten aromatische Polyamide enthaltenden Formmassen sich deutlich einfacher verarbeiten lassen.

Die in der Beschreibung und in den Beispielen genannten Parameter wurden mit Hilfe nachstehender Verfahren bestimmt.

Die J-Werte wurden an 0,5 Gew.-%igen Lösungen der Polymeren in einem Phenol/o-Dichlorbenzol-Gemisch (50 : 50 Gewichtsteile) bei 25 °C nach DIN 53 728 bestimmt.

Die MVI-Werte wurden nach DIN 53 735 - MFI - B an einem Göttfert-Viskosimeter bei 320 °C und 21,6 kg Last gemessen.

Das mit Buchstaben gekennzeichnete Beispiel ist nicht erfindungsgemäß. -

## Beispiele

### Beispiel 1

21,62 g (0,05 Mol) 4,4′-Bis(4-aminophenoxy)-diphenylsulfon und 8,31 g (0,05 Mol) Isophthalsäure wurden mit 82 mg Phosphoriger Säure (0,001 Mol) und 122 mg (0,001 Mol) 4-Dimethylaminopyridin und 1,07 g Benzolsulfonsäure-N-butylamid in einem Rührkolben mit Rührer, Stickstoffeinleitung und Destillationsbrücke 20 Minuten bei 250 °C, 10 Minuten bei 300 °C und 10 Minuten bei 320 °C polykondensiert. Im Verlauf der Reaktion wurde das bei der Polykondensation abgespaltene Wasser abdestilliert. Der J-Wert (0,5 Gew.-% in Phenol/1,2-Dichlorbenzol) betrug 54 $cm^3$/g. MVI: 45 $cm^3$/10 min.

### Beispiel A

Unter den Bedingungen in Beispiel 1 wurden 21,62 g (0,05 Mol) 4,4′-Bis(4-aminophenoxy)-diphenylsulfon und 8,31 g (0,05 Mol) Isophthalsäure in Gegenwart von 82 mg Phosphoriger Säure und 122 mg Dimethylaminopyridin polykondensiert. Der J-Wert betrug 34 $cm^3$/g. Durch Festphasennachkondensation bei 250 °C wurde der J-Wert von 54 $cm^3$/g eingestellt. Der MVI-Wert betrug 5 $cm^3$/10 min.

### Beispiel 2

21,62 g (0,05 Mol) 4,4′-Bis(4-aminophenoxy)-diphenylsulfon, 8,31 g (0,05 Mol) Isophthalsäure und 0,23 g Benzolsulfonsäure-N-phenylamid wurden analog Beispiel 1 mit 122 mg (0,001 Mol) Dimethylaminopyridin und 310 mg (0,001 Mol) Triphenylphosphit polykondensiert. Nach 20 Minuten bei 250 °C, 10 Minuten bei 300 °C und 40 Minuten bei 320 °C betrug der J-Wert 57 $cm^3$/g. MVI: 48 $cm^3$/10 min.

## Ansprüche

1. Formmasse bestehend aus einem thermoplastisch verarbeitbaren, aromatischen Polyamid enthaltend die Reste nachstehender Ausgangsmonomeren:

A. HOOC - Ar - COOH

B. $H_2N$ - Ar′ - $NH_2$

C. R - $SO_2NH$ - R''

hierbei bedeutet

Ar, Ar': 1.3- oder 1.4-Phenylen; 1.4-, 1.5-, 2.6- oder 2.7-Naphthylen,

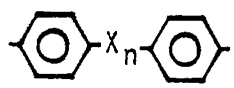

oder

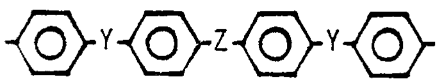

Ar und Ar' können gleich oder verschieden sein;

X: -O-; -S-; $-SO_2-$; -CO-; $-CR'_2-$;

Y: -O-; -S-;

Z: $-SO_2-$; -CO-;

R: 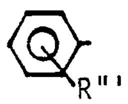 ; $C_{1-22}$-Alkyl;

R': -H; $C_{1-4}$-Alkyl;

R'': 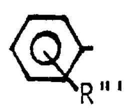 ; $C_{1-22}$-Alkyl;

R''': -H; $C_{1-4}$-Alkyl; Halogen; n: 0 oder 1

wobei die Komponente C. zu 0,001 bis 10 Gew.-% - bezogen auf die Summe der Komponenten A. und B. in dem Polyamid enthalten ist.

2. Formmasse gemäß Anspruch 1 mit der Bedeutung von Ar: 1.3-Phenylen.

3. Formmasse gemäß Anspruch 1 und 2 mit der Bedeutung von

Ar': 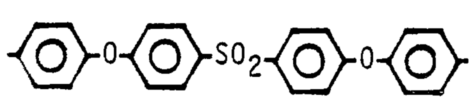

4. Formmasse gemäß den Ansprüchen 1 bis 3 mit der Bedeutung von

R: 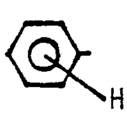

R'': $C_{1-4}$-Alkyl

5. Formmasse gemäß den Ansprüchen 1 bis 3 mit der Bedeutung von

R = R'': 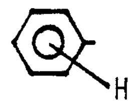

6. Formmasse gemäß den Ansprüchen 1 bis 5 in der die Komponente C. zu 0,05 bis 5 Mol-% in dem Polyamid enthalten ist.